# EUROPEAN PATENT SPECIFICATION

(11) **EP 0 825 708 B1**
(45) Date of publication and mention of the grant of the patent: **15.10.2003**
(21) Application number: 97113899.5
(22) Date of filing: 12.08.1997
(51) Int. Cl.: H02P 8/08, B60Q 1/115

(54) **Stepping motor control device**
Regelvorrichtung für einen Schrittmotor
Dispositif de commande pour un moteur pas à pas

(30) Priority: 20.08.1996 JP 21884996
(43) Date of publication of application: 25.02.1998
(73) Proprietor: DENSO CORPORATION, Kariya-City Aichi-Pref. 448 (JP); ASMO CO., LTD., Kosai-city, Shizuoka-pref. (JP)
(72) Inventor: Okuchi, Hiroaki, Kariya-City, Aichi-pref. (JP); Ushida, Manabu, Kariya-City, Aichi-pref. 448 (JP); Iida, Takahiro, Kosai-City, Shizuoka-pref. (JP)
(74) Representative: Leson, Thomas Johannes Alois, Dipl.-Ing.

(56) References cited:
- DE-A- 4 017 856
- US-A- 3 909 125
- PATENT ABSTRACTS OF JAPAN vol. 007, no. 076 (E-167), 30 March 1983 & JP 58 006097 A (SHIMAZU SEISAKUSHO KK), 13 January 1983,
- PATENT ABSTRACTS OF JAPAN vol. 015, no. 464 (E-1137), 25 November 1991 & JP 03 198698 A (MATSUSHITA ELECTRIC IND CO LTD), 29 August 1991,

## Description

The present invention relates to a stepping motor control device according to the preamble of claim 1. In a conventional stepping motor control device, the phase coils are always energized even while the stepping motor is at rest in order to hold the rotor in a normal stop position, which ensure accurate restarting of the stepping motor. However, the energizing current necessarily consumes power and heats the coils, thereby affecting the reliability of the device.

If the current supply is stopped and an electro-magnetic force for holding the rotor disappears, the rotor may be shifted by some external force. If the stepping motor is started while the stop position thereof is not correct, the rotation control of the stepping motor can not be carried out accurately.

From the patent abstract of the Japanese publication JP-58006097 is known a drive circuit controlled by a CPU, which counts the pulses supplied to a pulse motor to detect the position of a machine system. A power interruption is notified to the CPU by a supplied interrupt. When the interrupt is applied to the CPU, the CPU continues the energization of the pulse motor to one phase state and then deenergizes the motor, and then stores the exciting state in a memory. When power source is then reenergized, the energization of the pulse motor is restarted in accordance with the stored energizing state.

Further, patent abstract of the Japanese publication JP-03198698 discloses a stepping motor control device, in which, when a stepping motor is stopped, an excitation pattern current in its stop position is allowed to flow in the stepping motor for a second predetermined time at each inputting of an excitation command signal from timer means, that is, at each of a first predetermined time. In this way, the stop position of the stepping motor is held further with no power supply and no power voltage selector switch, for holding the stop position when the stepping motor is stopped, are required.

JP-A-3-198698 proposes a system in which current supplied to all the phase coils is cut as long as the stepping motor is at rest and intends to correct the. rotor position by intermittent supply of the holding current. In order to carry out accurate rotation control of the stepping motor, it is necessary to correct the rotor stop position before starting of the motor. The intermittent supply proposed in the publication, however, does not ensure timing of the current supply to be just before starting of the motor. That is, the rotor position can not always be corrected just before starting or restarting of the motor. As a result, the motor may be started without correction, and the rotation control thereof may not be accurate.

Therefore, an object of the present invention is to provide a stepping motor control device in which the start position of the rotor is corrected just before starting or restarting of the motor.

Another object of the present invention is to provide a control device of a stepping motor which reduces power consumption of the stepping motor and temperature rise of the coils as well as correcting the position accurately.

This object is accomplished according to the present invention by a stepping motor control device as claimed in the appended claims.

According to an aspect of the invention, the next start timing is measured from the last start timing by a timer repeatedly.

Thus, the start timing of the stepping motor can be decided . by the simple timer accurately.

In the drawings;
Fig. 1 is a schematic diagram illustrating an automatic light-beam-direction control system for a vehicle according to an embodiment of the present invention;
Fig. 2 is a cross-sectional side view illustrating a head lamp;
Fig. 3 is an equivalent circuit diagram of a stepping motor;
Fig. 4 is a timing chart of current supplied to each of coils of the stepping motor;
Fig. 5 is a flow chart showing control steps executing a driving routine of the stepping motor;
Fig. 6 is a flow chart showing control steps executing a preliminary coil-excitation routine; and
Fig. 7 is a timing chart showing currents of a coil when the stepping motor is not operated (left) and is operated (right) after the preliminary coil excitation.

An automatic light-beam-direction control system of vehicular head lamp units according to an embodiment for a stepping motor control device of the present invention is described with reference to the appended drawings.

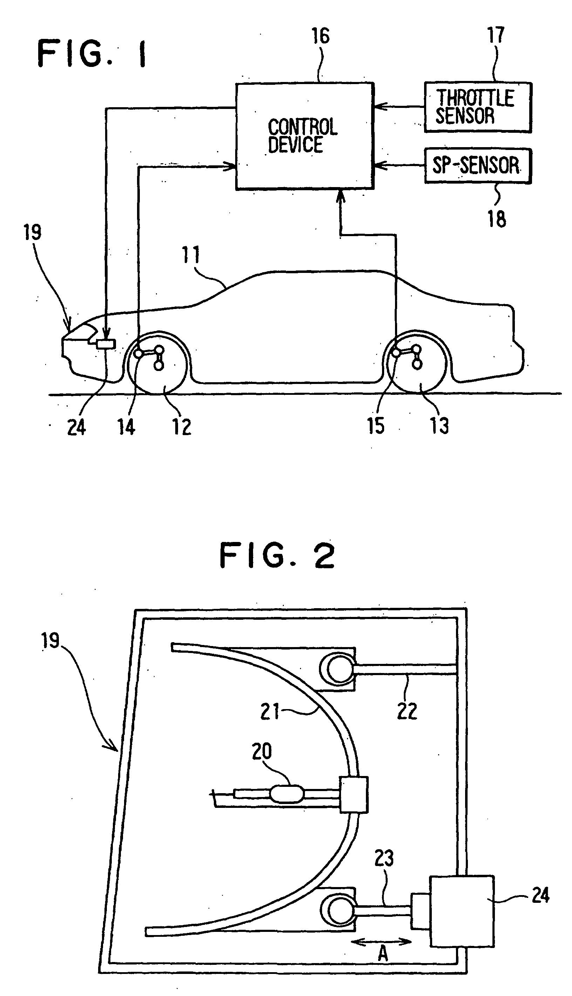

A general structure of the automatic light-beam-direction control system of vehicular head lamp units is described first with reference to Figs. 1 and 2.

A vehicle body 11 has front wheels 12 and rear wheels 13, and level sensors 14 and 15 are fixed to the body at the middle of the front wheels 12 and at the middle of the rear wheels 13 respectively to detect relative vertical displacement (height of the body) between the vehicle body 11 and the wheel axles and send vehicle level signals to a control circuit 16, which also receives a throttle position signal detected by a throttle position sensor 17 and a vehicle speed signal detected by a vehicle speed sensor 18.

Head lamp units 19 are fixed to front portions of the vehicle body 11. As shown in Fig. 2, each of the head lamp units 19 has a light bulb 20 fixed to a reflector 21, which is in turn supported by a stationary support member 22 at an upper portion of the back of the reflector 21 and by a movable support member 23 at a lower portion of the back thereof. The movable support member 23 is driven by a stepping motor 24 to slide back and forth (as indicated by an arrow A), thereby turning the reflector 21 around a joint of the stationary support member 22 to change the light beam direction of the head lamp 19. The stepping motor 24 is equipped with a mechanism (not shown) which reduces the rotation speed of a rotor 25 and converts the rotation to a sliding motion.

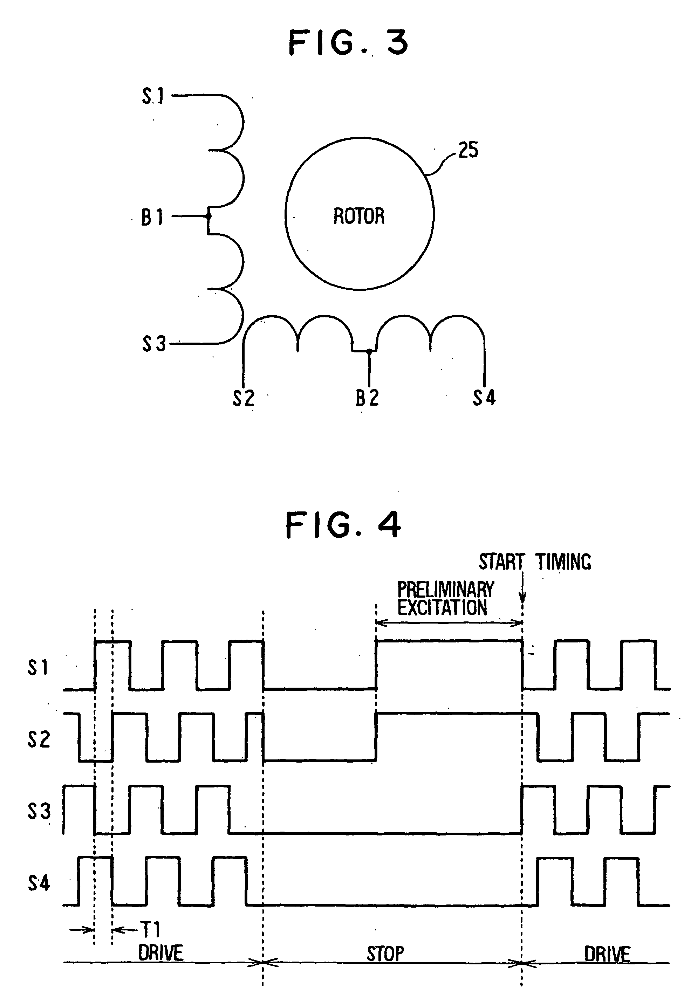

The stepping motor 24 has a stator core (not shown) with four coils S1-S4 as shown in Fig. 3, and the rotor is driven by a two-phase-driving system which drives the rotor 25 by energizing two coils concurrently as shown in Fig. 4, in which one step of the rotor is indicated by T1. Each of the four coils S1-S4 is energized and deenergized for a period corresponding to two steps of the rotor repeatedly to rotate the rotor by one step each.

The stepping motor 24 is controlled by the control circuit 16. The control circuit 16 calculates a target number of the steps as described later and generates a driving signal according to the target number to drive the stepping motor 24. When the stepping motor is not operated, all the coils are deenergized for the time being. In order to correct the position of the rotor 25 before restarting of the motor, the coils energized last time are preliminarily energized by current having the same phase as the current supplied last time, as shown in Fig. 4, for a period between several milliseconds and several tens of milliseconds, which may change according to the type or shape of the stepping motor 24.

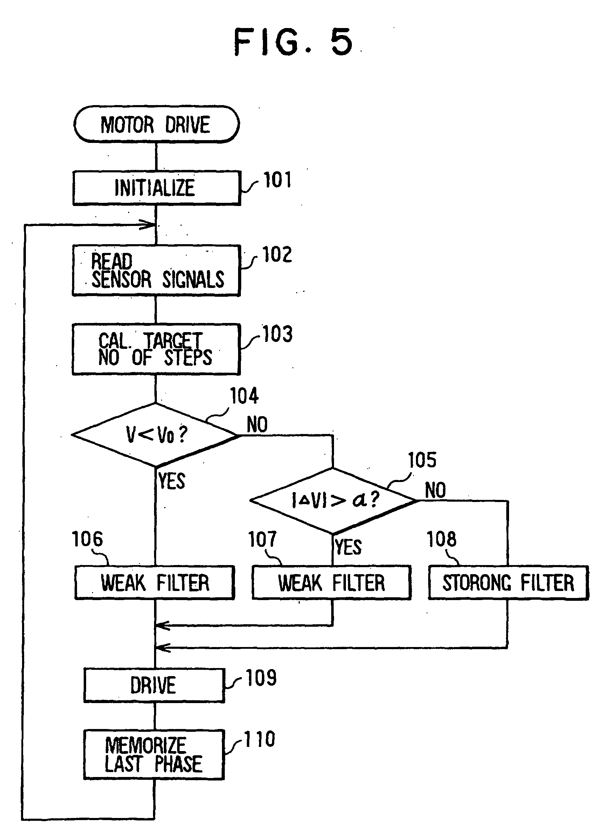

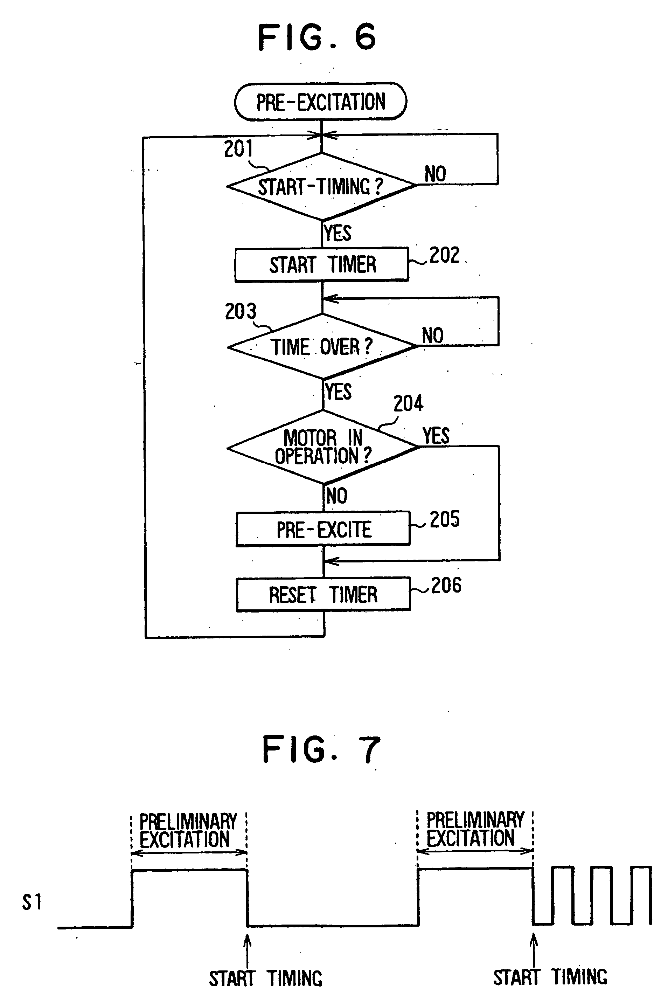

The stepping motor 24 is controlled according to routines shown in Figs. 5 and 6, which are stored in a ROM (not shown) disposed in the control circuit 16.

In a step 101 of the routine shown in Fig. 5, initialization of the stepping motor 24 and the RAM (not shown) of the control circuit 16 are executed. Then, output signals transmitted from the vehicle body sensors 14 and 15 are read in a step 102. Subsequently, an inclination angle of the vehicle body 11 is calculated according to a difference between the signals from the body level sensors 14 and 15, and a target number of driving steps for changing the light beam angle of the head lamp 19 is calculated from the inclination angle in a step 103.

Thereafter, one of control modes, a stop mode, an acceleration-deceleration mode or a cruising mode, is decided according to a vehicle speed and a change Δv in the vehicle speed in a unit time in steps 104 and 105. If the vehicle speed V is lower than a set speed Vo (e.g. Vo = 2 km/h), the control mode is deemed the stop mode, and the control process goes to a step 106, where a "weak filter" is added to the number of target steps calculated in the step 103 to decide a final control number of steps. The "filter" referred here is a means to anneal (or delay the signal of) the target number of steps to reduce disturbance by outside noises, and the "weak filter" has a small anneal coefficient which does not practically delay the control process. The addition of the "weak filter" is sufficient in the stop mode because disturbances are not so significant as the cruising mode, where the vehicle runs on an uneven road surface.

If V≧Vo and |ΔV|>α (e.g. α=2m/s²), the control mode is deemed the acceleration-deceleration mode, and the process goes to a step 107, where a "weak filter" is added to the step 103 to obtain a final control number of steps in a short time. In this mode, because the throttle position changes to change the engine torque and the inclination angle of the vehicle body 11 in the running direction changes wide, the "weak filter 2 is added to follow the wide change in the inclination angle of the vehicle body timely.

If V≧Vo and |Δv| ≦ α, the control mode is deemed the cruising mode, and the process goes to a step 108, where a "strong filter" is added to the target number of steps obtained in the step 103 to moderate changing speed of the target number of steps. Because the inclination angle of vehicle body in the running direction in this mode is comparatively small and the timely control of the light beam angle of the head lamp is not required so severe, the "strong filter" is effective to reduce the disturbances caused by the uneven road and the like.

After the final control number of steps is decided in one of the steps 106, 107 and 108, the control process goes to a step 109, where the stepping motor 24 is driven by a drive signal (drive pulse), and the last coils in operation just before the stepping motor 24 are memorized in a step 110. The above described steps 102-110 are repeated each preset time (e.g. 50 ms) to provide the drive signals according to the target number of steps.

A preliminary coil-exciting routine is shown in Fig. 6. This routine is executed concurrently with the stepping motor driving routine shown in Fig. 5 so that the coils energized last time are preliminarily energized with current having the same phase as the last current just before the restarting.

In a step 201, a start timing for driving the stepping motor 24 is checked by judging whether the first drive signal is provided in the step 109 shown in Fig. 5 or not. If YES, the process goes to a step 202 to start a timer, which measures a lapse of time from the start timing.

The process stays in a step 203 until the timer measures a certain lapse of time (e.g. 30 ms) which corresponds to a start timing of the preliminary excitation period. Thereafter, the process goes to a step 204, where whether the stepping motor 24 is operating or not is examined. This step is necessary, because the stepping motor 24 may not complete the rotation before restarting of the motor if the motor is driven by a drive signal commanding to rotate a large number of steps at one time.

If the stepping motor 24 does not complete the necessary rotation before the restarting of the motor or the start timing of the preliminary coil excitation, the step 204 provides YES, and the process goes to a step 206 to reset the timer, skipping the next (preliminary coil excitation) step 205, and returns to the step 201.

If the completion of the necessary rotation of the stepping motor 24 is detected and NO is provided in the step 204, the process goes to the step 205, where the last coils energized with the last current are preliminarily energized by current having the same phase as the last current during a certain period (e.g. 20 ms). Thus, the position of the rotor can be corrected surely just before restarting of the stepping motor 24. The timer is reset, thereafter, in the step 206 and the process returns to the step 201.

Thus, the rotor position can be corrected accurately by repeating the steps 201-206 while all the coils are deenergized.

In the above embodiment, the steps 102-110 shown in Fig. 5 are repeated for a certain set time (e.g. 50 ms) so that the start timing of the stepping motor 24 (i.e. the timing to provide a first drive signal in the step 109) is fixed at each time interval (e.g. 50 ms).

Although the start timing of the stepping motor 24 is fixed and provided automatically at each time interval even when the stepping motor is not operated, no drive signal to drive the stepping motor 24 is provided at the start timing as long as the stepping motor 24 is not operated. Because the coil is preliminarily excited, as shown in Fig. 7, to correct the rotor position, the rotor position can be corrected repeatedly or regularly even if the stepping motor stays inoperative for a long time.

While the start timing of the stepping motor 24 is fixed at a set cycle in the above embodiment, it is possible that the cycle of the start timing is increased in the cruising mode and decreased in the acceleration-deceleration mode.

It is possible that the control circuit 16 changes the start timing according to circumstances. In this case, if the control circuit 16 decides to drive the stepping motor 24 according to the signal data from the sensor, it calculates a time for calculating the target number of steps and, concurrently, correct the rotor position by preliminarily exciting the coil just before the starting timing. The drive signal can be provided just after the target number of steps is calculated.

In the above embodiment, the four-phase stepping motor is operated by the two-phase driving system. However, it can be operated by a single-phase driving system. The present invention can be applied to a three-phase stepping motor or another type.

The present invention is applicable not only to the automatic light-beam-direction control system of vehicular head lamp units but also to various system having a stepping motor as a driving means.

All the coils (S1,S2,S3,S4) of the stepping motor (24) is deenergized when the motor (24) is stopped so that power consumption and temperature rise can be prevented and accurate operation of the motor (24) can be assured. A target number of steps are calculated to rotate the stepping motor (24) to a target position. When the stepping motor (24) is not operated, current supply to all the coils (S1,S2,S3,S4) is stopped. In order to correct position of the rotor (25) of the stepping motor (24) - which may shift from a normal position when it is stopped - just before restarting of the motor (24), the coils which are supplied with currents having specific phases just before the motor (24) is stopped are supplied with the same currents in a period just before the next start timing.

## Claims

1. A stepping motor control device having a stepping motor with a plurality of coils (**S1, S2, S3, S4**) and a control circuit (**16**) which is arranged for energizing specific coils to drive the stepping motor (**24**) and for stopping the stepping motor (**24**) by deenergizing all of said coils (**S1, S2, S3, S4**),
**characterized in that**
the control circuit is arranged for starting the energizing of specific coils at a respective periodically start timing, wherein the start timings are provided even when the stepping motor is not operated; and
the control circuit is arranged for supplying each of the specific coils with a current having same phase as a current supplied last time to the respective coil just before the stepping motor (**24**) has been stopped in a period just before a respective one of said start timings and just after a target number of steps has been calculated by the control circuit, so as to allow the stepping motor (**24**) to rotate full steps commanded by the control circuit (**16**).

2. A stepping motor control device according to claim 1, **characterized in that**
a next start timing is measured from a preceding start timing by a timer repeatedly.

3. A stepping motor control device according to claim 2, **characterized in that**
the coils which are supplied with last currents are not energized if said stepping motor (**24**) is still operated when or after the next start timing is measured by the control circuit (**16**).

## Patentansprüche

1. Regelvorrichtung für einen eine Vielzahl von Wicklungen (S1, S2, S3, S4) aufweisenden Schrittmotor, mit einer Steuerschaltung (16) zur Erregung spezifischer Wicklungen zum Antrieb des Schrittmotors (24) und zum Stillsetzen des Schrittmotors (24) durch Aberregung sämtlicher Wicklungen (S1, S2, S3, S4),
**dadurch gekennzeichnet, dass**
die Steuerschaltung dahingehend ausgestaltet ist, dass
die Erregung spezifischer Wicklungen zu einer jeweiligen periodischen Startzeit begonnen wird, wobei die Startzeiten gebildet werden, auch wenn sich der Schrittmotor nicht in Betrieb befindet, und
den spezifischen Wicklungen jeweils während einer Zeitdauer direkt vor einer jeweiligen Startzeit und direkt nach einer durch die Steuerschaltung erfolgten Berechnung einer Sollzahl von Schritten ein Strom zugeführt wird, der die gleiche Phase wie ein der jeweiligen Wicklung direkt vor dem Stillsetzen des Schrittmotors (24) zuletzt zugeführter Strom aufweist, um dem Schrittmotor (24) eine Drehbewegung in vollständigen, von der Steuerschaltung (16) angeordneten Schritten zu ermöglichen.

2. Schrittmotor-Regelvorrichtung nach Anspruch 1, **dadurch gekennzeichnet, dass** eine nächste Startzeit ausgehend von einer vorhergehenden Startzeit von einem Zeitgeber wiederholt gemessen wird.

3. Schrittmotor-Regeleinrichtung nach Anspruch 2, **dadurch gekennzeichnet, dass** keine Erregung der mit den zuletzt zugeführten Strömen zu beaufschlagenden Wicklungen erfolgt, wenn sich der Schrittmotor (24) bei oder nach der von der Steuerschaltung (16) vorgenommenen Messung der nächsten Startzeit noch in Betrieb befindet.

## Revendications

1. Dispositif de commande de moteur pas-à-pas comportant un moteur pas-à-pas pourvu d'une pluralité de bobines (S1, S2, S3, S4) et un circuit de commande (16) qui est agencé de manière à exciter des bobines spécifiques pour commander le moteur pas-à-pas (24) et pour arrêter le moteur pas-à-pas (24), par désexcitation de l'ensemble desdites bobines (S1, S2, S3, S4),
**caractérisé en ce que**
le circuit de commande est agencé de manière à déclencher l'excitation de bobines spécifiques à un instant de démarrage périodique respectif, les instants de démarrage étant prévus même lorsque le moteur pas-à-pas n'est pas activé; et
le circuit de commande est agencé de manière à envoyer à chacune des bobines spécifiques un courant possédant la même phase que le courant envoyé la dernière fois à la bobine respective juste avant que le moteur pas-à-pas (24) soit arrêté pendant une période se situant juste avant l'un respectif desdits instants de démarrage et juste après qu'un nombre de consigne de pas a été calculé par le circuit de commande, de manière à permettre au moteur pas-à-pas (24) de tourner sur des pas complets commandés par le circuit de commande (16).

2. Dispositif de commande de moteur pas-à-pas selon la revendication 1, **caractérisé en ce que**
un instant de démarrage suivant est mesuré de façon répétée à partir d'un instant de démarrage précédent par une minuterie.

3. Dispositif de commande de moteur pas-à-pas selon la revendication 2, **caractérisé en ce que**
les bobines, qui sont alimentées par des derniers courants, ne sont pas excitées si ledit moteur pas-à-pas (24) est encore activé lorsque ou après que le prochain instant de démarrage a été mesuré par le circuit de commande (16).
